# EUROPÄISCHE PATENTSCHRIFT

(11) **EP 2 129 508 B1**
(45) Veröffentlichungstag und Bekanntmachung des Hinweises auf die Patenterteilung: **30.01.2019**
(21) Anmeldenummer: 08706881.3
(22) Anmeldetag: 07.02.2008
(51) Int. Cl.: B29C 49/06, B29C 61/02

(54) **VERFAHREN ZUR BLASFORMUNG VON BEHÄLTERN**
METHOD FOR BLOW MOULDING CONTAINERS
PROCÉDÉ DE MOULAGE PAR SOUFFLAGE DE CONTENANTS

(30) Priorität: 28.03.2007 DE 102007014774
(43) Veröffentlichungstag der Anmeldung: 09.12.2009
(73) Patentinhaber: KHS Corpoplast GmbH, 22145 Hamburg (DE)
(72) Erfinder: BALKAU, Karl-Heinz, 22113 Oststeinbek (DE); RASCH, Jens-Peter, 22926 Ahrensburg (DE); MATTHIESEN, Martin, 22359 Hamburg (DE); GERNHUBER, Matthias, 22527 Hamburg (DE); HAESENDONCKX, Frank, 22395 Hamburg (DE)
(74) Vertreter: Hausfeld, Norbert
(86) Internationale Anmeldenummer: PCT/DE2008/000260
(87) Internationale Veröffentlichungsnummer: WO 2008/116435

(56) Entgegenhaltungen:
- EP-A1- 0 023 091
- EP-A1- 0 739 823
- EP-A1- 0 739 823
- JP-A- 3 234 520
- US-A- 5 713 480
- US-A- 5 713 480

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird. Ein solches Verfahren ist aus EP-A1-0739823, die den Oberbegriff des Anspruchs 1 offenbart, bekannt.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Aus der JP 3234520 (A) ist es bereits bekannt, einen temperaturstabilen Behälter in einem zweistufigen Blasvorgang herzustellen. Ein Primärbehälter wird nach seiner Blasformung durch Temperatureinwirkung rückgeschrumpft und dann einer zweiten Blasform zugeführt. Hier erfolgt ein zweiter Blasformungsvorgang. Durch den zweistufigen Blasvorgang mit einem zwischen den Blasformungsstufen durchgeführtem Rückschrumpfen wird die Temperaturbeständigkeit des endgültigen Behälters erhöht.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Bei der Durchführung einer blastechnischen Behälterformung besteht eine wesentliche Aufgabe darin, in der Behälterwandung eine vorgegebene Materialverteilung zu erreichen. Ebenfalls besteht eine Anwendungsvorgabe darin, ein vorgegebenes Behältervolumen zu gewährleisten. Während des Blasens des Behälters in der Blasform ist das vorgegebene Sollvolumen zwar exakt erreicht, im Anschluß an eine Druckabsenkung und ein Entnehmen des Behälters aus der Blasform erfolgt jedoch typischerweise ein Rückschrumpfen des Materials, so daß das tatsächliche Volumen des geblasenen Behälters geringer ist, als das Volumen des Behälters innerhalb der Blasform und vor einer Druckabsenkung.

Zur Reduzierung des Effektes des Zurückschrumpfens sind unterschiedliche Maßnahmen bekannt, die sich auf eine geeignete Materialverteilung, eine vorteilhafte Konturgebung sowie die blastechnische Herstellung einer strukturierten Behälterwandung beziehen. Diese Maßnahmen vermindern jedoch nur das Ausmaß des Rückschrumpfens, eine Volumenverminderung des Behälters kann jedoch nicht vollständig verhindert werden.

Aufgabe der vorliegenden Erfindung ist es daher, ein Verfahren der einleitend genannten Art derart zu verbessern, daß ein vorgegebenes Sollvolumen vom Endprodukt mit höchstens geringen Abweichungen eingehalten wird.

Diese Aufgabe wird erfindungsgemäß dadurch gelöst, daß der Behälter während der Blasdruckeinwirkung mit einer Ist-Kontur geblasen wird, die von einer Soll-Kontur des Behälters derart abweicht, daß die Ist-Kontur des Behälters nach einer Entformung und der Durchführung eines Rückschrumpfens im wesentlichen die Soll-Kontur annimmt.

Weitere Aufgabe der vorliegenden Offenbarung ist es, eine Vorrichtung der einleitend genannten Art derart zu konstruieren, daß ein Endprodukt mit einer lediglich geringen Abweichung von einem vorgegebenen Inhaltsvolumen herstellbar ist.

Diese Aufgabe wird erfindungsgemäß dadurch gelöst, daß die Innenkontur der Blasform mindestens bereichsweise unterschiedlich zu einem Sollwertverlauf der Außenkontur des Behälters ausgebildet ist.

Der Behälter wird somit während des Blasformvorganges mit einer Kontur und einem Volumeninhalt hergestellt, die von den jeweils vorgegebenen Sollwerten für das Endprodukt abweichen. Die betreffenden Abweichungen werden unter Berücksichtigung der bekannten Materialeigenschaften des Behälters berechnet oder empirisch bestimmt. Unter Berücksichtigung der bekannten physikalischen Eigenschaften des Materials des Behälters erfolgt somit ein kontrolliertes Rückschrumpfen derart, daß der rückgeschrumpfte Behälter die vorgegebene Sollkontur und das vorgegebene Sollvolumen aufweist.

Eine Berücksichtigung besonders von einem Rückschrumpfen betroffener Bereiche des Behälters erfolgt dadurch, daß die Ist-Kontur während der Blasdruckeinwirkung in einem Bodenbereich des Behälters von der Soll-Kontur abweicht.

Eine bevorzugte Anwendung besteht darin, daß ein Behälter mit einer Mehrzahl von Füßen geblasen wird.

In den Zeichnungen sind Ausführungsbeispiele schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine teilweise Darstellung einer Flasche mit Standfüßen in einer Seitenansicht,
- Fig. 6: einen Flaschenboden gemäß Blickrichtung VI in Fig. 5,
- Fig. 7: der Flaschenboden gemäß Blickrichtung VII in Fig. 5,
- Fig. 8: eine perspektivische Darstellung des Flaschenbodens gemäß Fig. 7,
- Fig. 9: eine Form zur Herstellung des Flaschenbodens gemäß Fig. 5 mit eingezeichneten Dimensionierungsgrößen und
- Fig. 10: ein mit der Bodenform gemäß Fig. 9 hergestellter Flaschenboden mit eingezeichneten endgültigen Dimensionierungsgrößen.

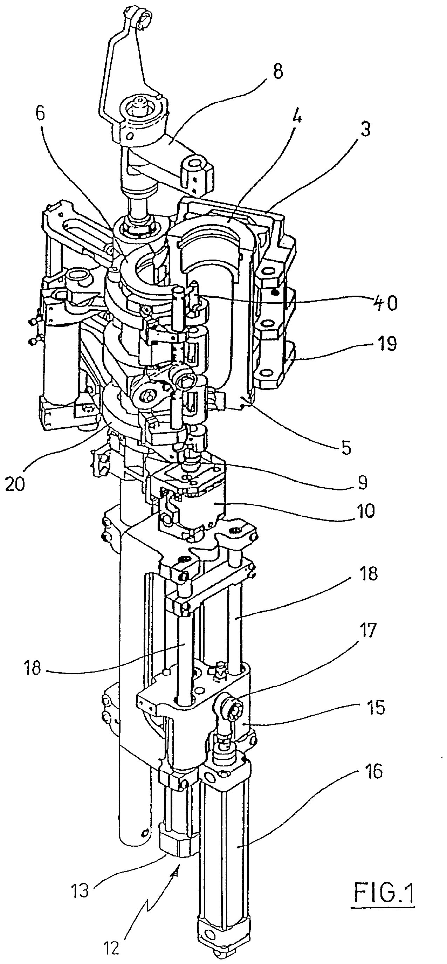

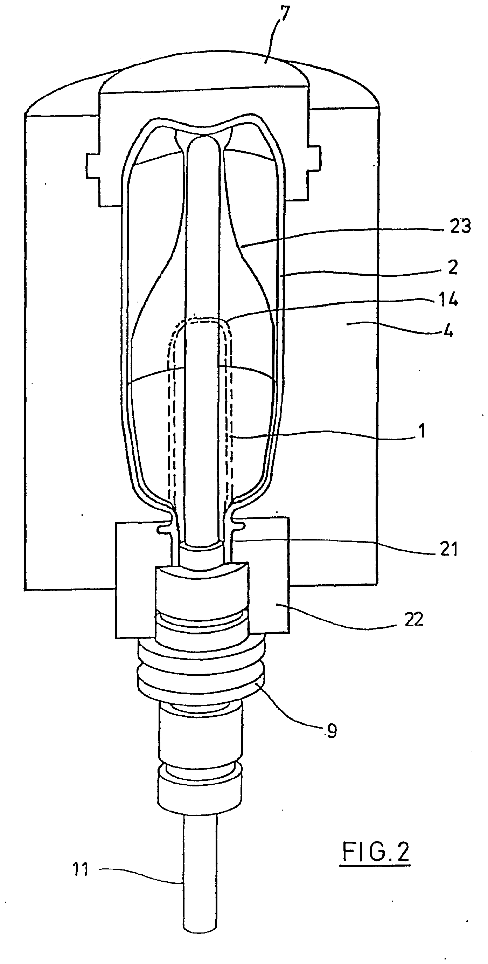

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurven-segmenten ist insbesondere dann zweckmäßig, wenn eine Mehr-zahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

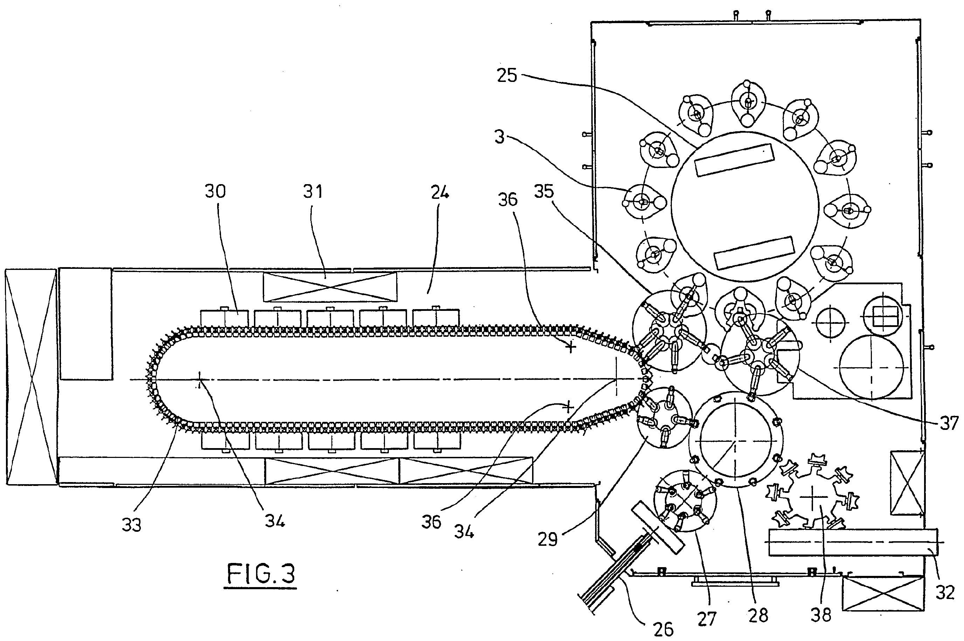

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimen-sionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

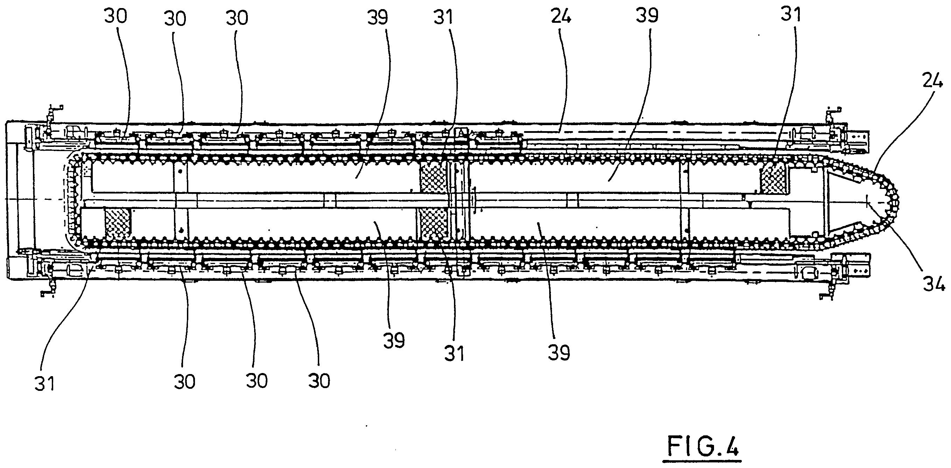

In der in Fig. 4 dargestellten modifizierten Heizstrekke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

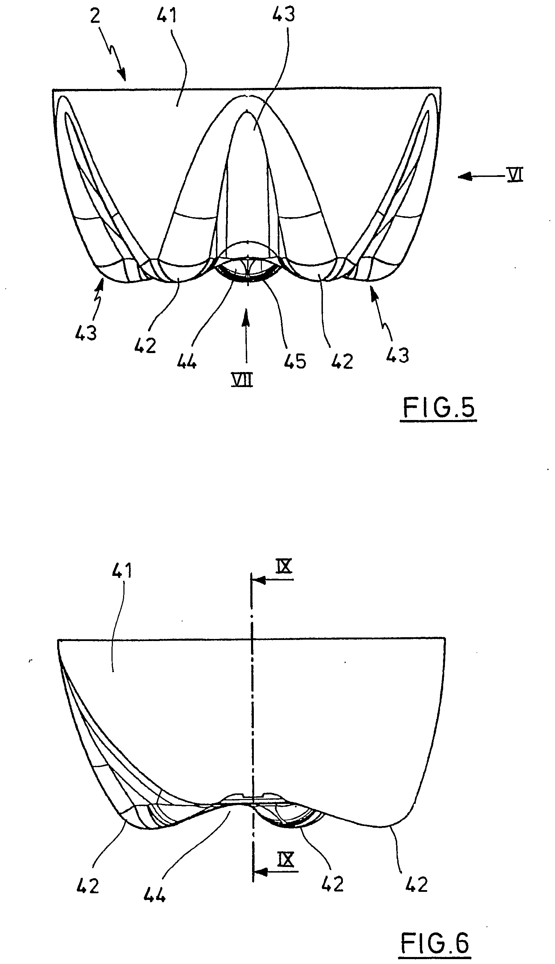

Fig. 5 zeigt eine Seitenansicht eines Bodenbereiches (41) des Behälters (2). Der Bodenbereich ist mit einer Mehrzahl von Füßen (42) versehen. Die Füße sind durch Vertiefungen (43) voneinander getrennt. Im Bereich eines Bodenzentrums (44) ist eine Innenwölbung (45) vorgesehen.

Fig. 6 zeigt eine Darstellung des Bodenbereiches (41) gemäß Blickrichtung VI in Fig. 5. Durch die Kombination von Fig. 5 und Fig. 6 ist insbesondere zu erkennen, daß die Füße (42) und die Vertiefungen (43) gerundet konturiert ineinander übergeleitet sind.

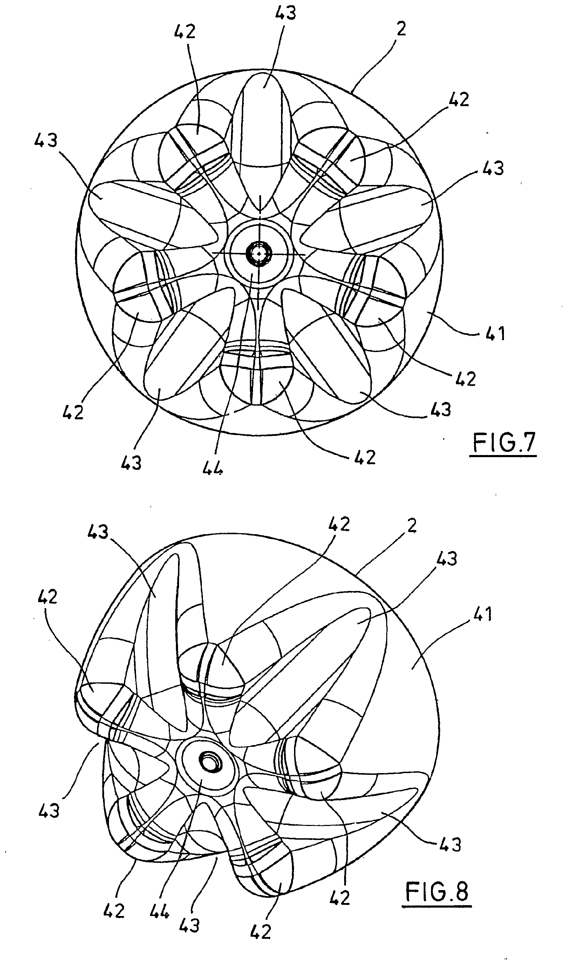

Aus den Darstellungen in Fig. 7 und Fig. 8 ist zu erkennen, daß es sich beim veranschaulichten Ausführungsbeispiel um einen Behälter (2) mit fünf Füßen (42) handelt, die in einer Umfangsrichtung um das Bodenzentrum (44) herum äquidistant relativ zueinander angeordnet sind. Die Dimensionierung jedes der Füße (42) ist im wesentlichen gleich gewählt. Ebenfalls ist im wesentlichen die Dimensionierung aller Vertiefungen (43) relativ zueinander annäherungsweise identisch gewählt. Mittellinien der Füße (42) und der Vertiefungen (43) sind im wesentlichen radial zum Bodenzentrum (44) ausgerichtet.

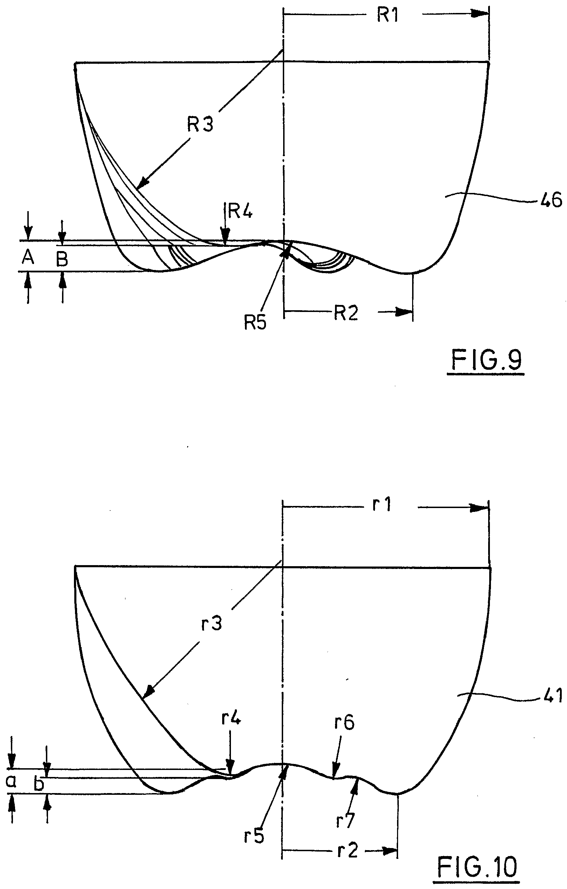

Fig. 9 zeigt eine Bodenform (46) zur Herstellung des Bodenbereiches (41). Die Bodenform (46) ist als Bodenteil (7) der Blasform (4) verwendbar. Eingezeichnet sind in Fig. 9 diverse Dimensionierungsparameter, insbesondere Krümmungsradien, die nachfolgend gemeinsam mit Fig. 10 noch weiter erläutert werden. Die Dimensionierungsparameter der Bodenform (46) werden mit großen Buchstaben bezeichnet.

Fig. 10 zeigt den unter Verwendung der Bodenform (46) hergestellten Bodenbereich (41) nach einer erfolgten Relaxation des Materials mit ebenfalls zugeordneten Dimensionierungsparametern, die mit kleinen Buchstaben bezeichnet werden.

Ziel bei der Herstellung des Bodenbereiches (41) ist es, Sollwerte für die Dimensionierungsparameter gemäß Fig. 10 möglichst genau einzuhalten. Aufgrund eines Schrumpfverhaltens des Materials des Behälters (3) nach einer Entformung kann dies dadurch erreicht werden, daß die in Fig. 10 eingezeichneten Dimensionierungsparameter der Blasform (46) definiert unterschiedlich zu den Dimensionierungsparametern des Bodenbereiches (41) in Fig. 10 gewählt werden.

Insbesondere wurde herausgefunden, daß eine optimale Behälterproduktion nicht durch eine gleichmäßige Vergrößerung oder Verkleinerung aller Dimensionierungsparameter erreicht wird, sondern daß im Hinblick auf die in Fig. 10 eingezeichneten Sollwerte für die Behälterkontur die Dimensionierungsparameter der Blasform in Fig. 9 teilweise größer und teilweise kleiner als die jeweiligen Sollwerte gewählt werden müssen und daß parameterspezifisch jeweils unterschiedliche Korrekturfaktoren zu berücksichtigen sind.

Darüber hinaus läßt sich die Konturtreue des Bodenbereiches (41) dadurch unterstützen, daß generell bestimmte Dimensionierungsvorgaben eingehalten werden.

Gemäß einem untersuchten Ausführungsbeispiel ergaben sich insbesondere die folgenden vorteilhaften Dimensionierungsvorschriften.

Das Verhältnis des Radius R1 und des Radius R2 sollte im Intervall 0,5 kleiner R2/R1 kleiner 0,7 liegen. Der Radius R1 entspricht hierbei einem maximalen Flaschenradius und der Radius R2 dem Abstand eines Standbereiches der Füße (42) vom Bodenzentrum (44).

Für den Radius R3, der einen Verbindungsbereich zwischen den Radien R1 und R4 definiert, erweist sich ein Dimensionierungsintervall von 100 mm kleiner R3 kleiner 150 mm als zweckmäßig. Der Radius R4 entspricht hierbei einer Überleitung der Vertiefung (43) in den Bereich des Bodenzentrums (44).

Der Radius R4 verbindet die Radien R3 und einen Radius R5 der Vertiefung (43) und liegt vorteilhafterweise in einem Intervall von 5 mm kleiner R4 kleiner 10 mm.

Der Radius R5 des Bodenzentrums (44) liegt vorteilhafterweise in einem Intervall von 25 mm kleiner R5 kleiner 75 mm.

Im Bezug auf die in Fig. 10 eingetragenen Dimensionierungsparameter für den Bodenbereich (41) gilt hinsichtlich der Höhe a des Bodenzentrums (44) sowie der Höhe b der Füße (42), daß für die Dimensionierung der Bodenform (46) A größer a und B größer b gewählt wird. Hinsichtlich des Radius R4 gilt R4 kleiner r4.

Die in Fig. 10 eingezeichneten Radien r6 und r7 werden derart dimensioniert, daß hinsichtlich r6 das Intervall 10 mm kleiner r6 kleiner 50 mm gilt, hinsichtlich r7 erweist sich das Intervall 5 mm kleiner r7 kleiner 30 mm als vorteilhaft.

Bezüglich des Radius R5 gilt R5 kleiner r5 und hinsichtlich des Radius R2 gilt R2 größer r2. Der Radius r2 ist variabel.

Zur Festlegung der Kontur der Bodenform (46) in Abhängigkeit von der konkreten Dimensionierung der zu blasenden Flasche geltend insbesondere die nachfolgend spezifizierten Zusammenhänge. Allgemein gilt R1 ist größer als r1, wobei R1 typischerweise zwischen 0,1% und 1,0% größer als r1 gewählt wird. Hinsichtlich R2 gilt, daß dieser mit einem Wert von 99% bis 101% von r2 gewählt wird. Hinsichtlich R3 gilt, daß dieser Radius mit einem Wert von 95% bis 99% von r3 gewählt wird. Hinsichtlich des Radius R4 gilt, daß dieser mit einem Wert von 20% bis 100% von r4 gewählt wird und hinsichtlich des Radius R5 gilt, daß dieser mit einem Wert von 10% bis 50% von r5 gewählt wird.

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) durch Blasdruckeinwirkung in den Behälter (2) umgeformt wird, **dadurch gekennzeichnet, daß** der Behälter (2) während der Blasdruckeinwirkung mit einer Ist-Kontur geblasen wird, die von einer Soll-Kontur des Behälters (2) derart abweicht, daß die Ist-Kontur des Behälters (2) nach einer Entformung und der Durchführung eines Rückschrumpfens im wesentlichen die Soll-Kontur annimmt, wobei die Innenkontur der Blasform mindestens bereichsweise unterschiedlich zu einem Sollwertverlauf der Außenkontur des Behälters ausgebildet ist.

2. Verfahren nach Anspruch 1, **dadurch gekennzeichnet, daß** die Ist-Kontur während der Blasdruckeinwirkung in einem Bodenbereich (41) des Behälters (2) von der Soll-Kontur abweicht.

3. Verfahren nach Anspruch 1 oder 2, **dadurch gekennzeichnet, daß** ein Behälter (2) mit einer Mehrzahl von Füßen (42) geblasen wird.

4. Verfahren nach einem der Ansprüche 1 bis 3, **dadurch gekennzeichnet, daß** ein Behälter (2) im Bodenbereich (41) mit einem maximalen Radius r1 bezüglich einer Behälterlängsachse, einem Fußabstand r2 zur Behälterlängsachse, einem Krümmungsradius r3, einer Vertiefung (43) zwischen den Füßen (42), einem Radius r5 eines Bodenzentrums (44), einem den Radius r3 in den Radius r5 überleitenden Radius r4 und zwei das Bodenzentrum (44) in die Füße (42) überleitenden und hintereinander angeordneten Radien r6 und r7 versehen wird.

5. Verfahren nach einem der Ansprüche 1 bis 4, **dadurch gekennzeichnet, daß** der Bodenbereich (41) des Behälters (4) unter Verwendung einer Bodenform (46) mit den den Radien r1, r2, r3, r4, r5, r6 des Bodenbereiches (41) zugeordneten Radien R1, R2, R3, R4, R5, R6 der Bodenform (46) geformt wird.

6. Verfahren nach einem der Ansprüche 1 bis 5, **dadurch gekennzeichnet, daß** 0,5 kleiner R2/R1 kleiner 0,7 gewählt wird.

7. Verfahren nach einem der Ansprüche 1 bis 5, **dadurch gekennzeichnet, daß** 0,6 kleiner R2/R1 kleiner 0,7 gewählt wird.

8. Verfahren nach einem der Ansprüche 1 bis 5, **dadurch gekennzeichnet, daß** 0,65 kleiner R2/R1 kleiner 0,7 gewählt wird.

9. Verfahren nach einem der Ansprüche 1 bis 8, **dadurch gekennzeichnet, daß** 50 mm kleiner R3 kleiner 100 mm gewählt wird.

10. Verfahren nach einem der Ansprüche 1 bis 8, **dadurch gekennzeichnet, daß** 60 mm kleiner R3 kleiner 100 mm gewählt wird.

11. Verfahren nach einem der Ansprüche 1 bis 8, **dadurch gekennzeichnet, daß** 78 mm kleiner R3 kleiner 100 mm gewählt wird.

12. Verfahren nach einem der Ansprüche 1 bis 11, **dadurch gekennzeichnet, daß** 5 mm kleiner R4 kleiner 100 mm gewählt wird.

13. Verfahren nach einem der Ansprüche 1 bis 11, **dadurch gekennzeichnet, daß** 17,5 mm kleiner R4 kleiner 22,5 mm gewählt wird.

14. Verfahren nach einem der Ansprüche 1 bis 11, **dadurch gekennzeichnet, daß** 18,0 mm kleiner R4 kleiner 20,5 mm gewählt wird.

15. Verfahren nach einem der Ansprüche 1 bis 14, **dadurch gekennzeichnet, daß** 5 mm kleiner R5 kleiner 10 mm gewählt wird.

16. Verfahren nach einem der Ansprüche 1 bis 14, **dadurch gekennzeichnet, daß** 7,5 mm kleiner R5 kleiner 12,5 mm gewählt wird.

17. Verfahren nach einem der Ansprüche 1 bis 14, **dadurch gekennzeichnet, daß** 8 mm kleiner R5 kleiner 10,5 mm gewählt wird.

## Claims

1. A method for the blow moulding of containers (2) wherein, after having been conditioned thermally along a transport path in the area of a heating section (24), a preform (1) made of thermoplastic material is moulded in a blow mould (4) by the action of blowing pressure to form the container (2),
**characterised in that**
- during the action of the blowing pressure, the container (2) is blown with an actual outline which differs from a desired outline of the container (2) such that the actual outline of the container (2) essentially takes the desired outline after having been demoulded and shrunken back, wherein the inner outline of the blow mould is, at least in certain regions, formed such that it differs from a desired curve of the outer outline of the container.

2. The method in accordance with Claim 1, **characterised in that**, during the action of the blowing pressure, the actual outline differs from the desired outline in a bottom region (41) of the container (2).

3. The method in accordance with Claim 1 or 2, **characterised in that** a container (2) is blown with a plurality of feet (42).

4. The method in accordance with any one of Claims 1 to 3, **characterised in that**, in its bottom region (41), a container (2) is provided with a maximum radius r1 in relation to a longitudinal container axis, a foot distance r2 from the longitudinal container axis, a radius of curvature r3, a depression (43) between the feet (42), a radius r5 of a bottom centre (44), a radius r4 transferring radius r3 into radius r5, and two radiuses r6 and r7 transferring the bottom centre (44) into the feet (42) and being arranged one after the other.

5. The method in accordance with any one of Claims 1 to 4, **characterised in that**, using a bottom mould (46), the bottom region (41) of the container (2) is moulded with the radiuses R1, R2, R3, R4, R5, R6 of the bottom mould (46) that are allocated to the radiuses r1, r2, r3, r4, r5, r6 of the bottom region (41).

6. The method in accordance with any one of Claims 1 to 5, **characterised in that** 0.5 less than R2/R1 less than 0.7 is selected.

7. The method in accordance with any one of Claims 1 to 5, **characterised in that** 0.6 less than R2/R1 less than 0.7 is selected.

8. The method in accordance with any one of Claims 1 to 5, **characterised in that** 0.65 less than R2/R1 less than 0.7 is selected.

9. The method in accordance with any one of Claims 1 to 8, **characterised in that** 50 mm less than R3 less than 100 mm is selected.

10. The method in accordance with any one of Claims 1 to 8, **characterised in that** 60 mm less than R3 less than 100 mm is selected.

11. The method in accordance with any one of Claims 1 to 8, **characterised in that** 78 mm less than R3 less than 100 mm is selected.

12. The method in accordance with any one of Claims 1 to 11, **characterised in that** 5 mm less than R4 less than 100 mm is selected.

13. The method in accordance with any one of Claims 1 to 11, **characterised in that** 17.5 mm less than R4 less than 22.5 mm is selected.

14. The method in accordance with any one of Claims 1 to 11, **characterised in that** 18.0 mm less than R4 less than 20.5 mm is selected.

15. The method in accordance with any one of Claims 1 to 14, **characterised in that** 5 mm less than R5 less than 10 mm is selected.

16. The method in accordance with any one of Claims 1 to 14, **characterised in that** 7.5 mm less than R5 less than 12.5 mm is selected.

17. The method in accordance with any one of Claims 1 to 14, **characterised in that** 8 mm less than R5 less than 10.5 mm is selected.

## Revendications

1. Procédé de moulage par soufflage de récipients (2), dans le cadre duquel une préforme (1) en un matériau thermoplastique, après un conditionnement thermique le long d'un parcours de transport dans une zone de chauffage (24), est transformée en un récipient (2) à l'intérieur d'un moule de soufflage (4) sous l'action d'une pression de soufflage, **caractérisé en ce que** le récipient (2) est, pendant l'action d'une pression de soufflage, soufflé avec un profil effectif dont la divergence par rapport au profil de consigne du récipient (2) est telle que, après démoulage et rétraction, le profil effectif du récipient (2) prend essentiellement la forme du profil de consigne, le profil intérieur du moule de soufflage étant conformé da façon à différer, en partie au moins, d'un profil de consigne extérieur du récipient.

2. Procédé selon la revendication 1, **caractérisé en ce que,** pendant l'action d'une pression de soufflage, le profil effectif diffère du profil de consigne dans une zone de fond (41) du récipient (2).

3. Procédé selon la revendication 1 ou 2, **caractérisé en ce que** le récipient (2) moulé par soufflage est doté d'une pluralité de pieds (42).

4. Procédé selon l'une des revendications 1 à 3, **caractérisé en ce qu'**un récipient (2) est, dans la zone de fond (41), doté d'un rayon maximal r1 relativement à un axe longitudinal du récipient, d'un écart r2 entre les pieds et l'axe longitudinal du récipient, d'un rayon de courbure r3, d'une concavité (43) entre les pieds (42), d'un rayon r5 d'un centre (44) du fond, d'un rayon r4 de transition entre le rayon r3 et le rayon r5, et de deux rayons r6 et r7 formant, l'un derrière l'autre, la transition entre le centre (44) du fond et les pieds (42).

5. Procédé selon l'une des revendications 1 à 4, **caractérisé en ce que** la zone de fond (41) du récipient (4) est formée au moyen d'une pièce (46) de moulage du fond présentant des rayons R1, R2, R3, R4, R5, R6 correspondant aux rayons r1, r2, r3, r4, r5, r6 de la zone de fond (41).

6. Procédé selon l'une des revendications 1 à 5, **caractérisé en ce que** R2/R1 est choisi supérieur à 0,5 et inférieur à 0,7.

7. Procédé selon l'une des revendications 1 à 5, **caractérisé en ce que** R2/R1 est choisi supérieur à 0,6 et inférieur à 0,7.

8. Procédé selon l'une des revendications 1 à 5, **caractérisé en ce que** R2/R1 est choisi supérieur à 0,65 et inférieur à 0,7.

9. Procédé selon l'une des revendications 1 à 8, **caractérisé en ce que** R3 est choisi supérieur à 50 mm et inférieur à 100 mm.

10. Procédé selon l'une des revendications 1 à 8, **caractérisé en ce que** R3 est choisi supérieur à 60 mm et inférieur à 100 mm.

11. Procédé selon l'une des revendications 1 à 8, **caractérisé en ce que** R3 est choisi supérieur à 78 mm et inférieur à 100 mm.

12. Procédé selon l'une des revendications 1 à 11, **caractérisé en ce que** R4 est choisi supérieur à 5 mm et inférieur à 100 mm.

13. Procédé selon l'une des revendications 1 à 11, **caractérisé en ce que** R4 est choisi supérieur à 17,5 mm et inférieur à 22,5 mm.

14. Procédé selon l'une des revendications 1 à 11, **caractérisé en ce que** R4 est choisi supérieur à 18,0 mm et inférieur à 20,5 mm.

15. Procédé selon l'une des revendications 1 à 14, **caractérisé en ce que** R5 est choisi supérieur à 5 mm et inférieur à 10 mm.

16. Procédé selon l'une des revendications 1 à 14, **caractérisé en ce que** R5 est choisi supérieur à 7,5 mm et inférieur à 12,5 mm.

17. Procédé selon l'une des revendications 1 à 14, **caractérisé en ce que** R5 est choisi supérieur à 8 mm et inférieur à 10,5 mm.
